# EUROPEAN PATENT SPECIFICATION

(11) **EP 3 413 303 B1**
(45) Date of publication and mention of the grant of the patent: **08.07.2020**
(21) Application number: 16889418.6
(22) Date of filing: 14.12.2016
(51) Int. Cl.: G10L 25/51, G10L 15/20, G10L 15/28

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 03.02.2016 JP 2016019193
(43) Date of publication of application: 12.12.2018
(73) Proprietor: Sony Corporation, Tokyo 108-0075 (JP)
(72) Inventor: KIRIHARA, Reiko, Tokyo 108-0075 (JP)
(74) Representative: MFG Patentanwälte Meyer-Wildhagen Meggle-Freund Gerhard PartG mbB
(86) International application number: PCT/JP2016/087190
(87) International publication number: WO 2017/134935

(56) References cited:
- WO-A1-2015/029362
- WO-A1-2015/146017
- JP-A- 2000 181 500
- JP-A- 2005 090 838
- JP-A- 2012 025 270
- US-A1- 2001 039 494
- US-A1- 2015 287 414
- US-B1- 6 606 280
- TSUYOSHI USAGAWA ET AL: "REMOTE CONTROL SYSTEM USING SPEECH REDUCTION OF KNOWN NOISE", PROCEEDINGS OF THE INTERNATIONAL CONFERENCE ON SPOKEN LANGUAGE PROCESSING (ICSLP). KOBE, NOV. 18 - 22, 1990; [PROCEEDINGS OF THE INTERNATIONAL CONFERENCE ON SPOKEN LANGUAGE PROCESSING (ICSLP)], TOKYO, ASJ, JP, vol. 1 OF 02, 18 November 1990 (1990-11-18), pages 289-292, XP000503367,

## Description

### Technical Field

The present disclosure relates to an information processing device, an information processing method, and a program.

### Background Art

In recent years, voice input systems using voice recognition technology have been used. When a user performs an input by voice, it may be difficult to recognize a voice due to noise around the user (a sound other than the voice in the input by voice). For example, in a case in which the noise around the user is large, the voice of the user may not be recognized unless the user speaks with a louder voice. Here, in a case in which a source of noise is a device in which the volume can be adjusted by the user such as a television or a speaker, the voice recognition can be performed with a high degree of accuracy by the user manipulating the device and lowering the volume.

For the volume adjustment, there is a technique of automatically adjusting the volume of the sound output from the same device as the device to which the user's voice is input. For example, a television receiver that detects the user's voice and performs automatic volume adjustment so that a conversation can be smoothly performed even in a case in which a plurality of users are wearing headphones is disclosed in Patent Literature 1.

US 6,606,280 B1 discloses a voice-operated remote control to replace multiple entertainment system remotes, and it includes two parts, a base unit and a remote (or table-top) unit.

US 2015/0287414 A1 relates to a device control system which includes an ambient sound obtainer that obtains ambient sound around the plurality of devices at a first time. US 2001/0039494 A1 discloses a voice controller which controls a voice-controlled apparatus, such as a television set, and includes a receiver for receiving sound information from a corresponding transmitter, which is associated with at least one sound source, for example an amplifier or the television set itself.

Tsuyoshi Usagawa et al: "Remote control system using speech-reduction of known noise", Proceedings of the International conference on Spoken Language Processing (ICSLP), Kobe, Nov. 18-22, 1990; Conference on Spoken Language Processing (ICSLP), Tokyo, ASJ, JP, vol. 1 of 02, 18 November 1990, pages 289-292, proposes a method to reduce the effect of a priori known noise to realize a remote control system using spoken command words.

### Citation List

### Patent Literature

Patent Literature 1: JP 2008-72558A

### Disclosure of Invention

### Technical Problem

However, since the device that performs the voice recognition and the source of the sound around the user are not necessarily the same device, sufficient voice recognition accuracy is unlikely to be obtained even when the technology related to the volume adjustment mentioned above is applied to the voice recognition technology.

In this regard, the present disclosure proposes an information processing device, an information processing method, and a program which are novel and improved and capable of improving the voice recognition accuracy even in a case in which there are other sound sources around the user.

### Solution to Problem

According to a first aspect, the invention provides an information processing device in accordance with independent claim 1. According to a second aspect, the invention provides an information processing method in accordance with independent claim 13. According to a third aspect, the invention provides a computer program in accordance with independent claim 14. Further aspects of the invention are set forth in the dependent claims, the drawings and the following description.

According to the present disclosure, there is provided an information processing device including: a state detecting unit configured to detect a state of another device which can be a source of noise; and a state control unit configured to control the state of the other device on a basis of a detection result for the state of the other device and speech prediction of a user.

In addition, according to the present disclosure, there is provided an information processing method including: detecting a state of another device which can be a source of noise; and controlling, by a processor, the state of the other device on a basis of a detection result for the state of the other device and speech prediction of a user.

In addition, according to the present disclosure, there is provided a program causing a computer to implement: a function of detecting a state of another device which can be a source of noise; and a function of controlling the state of the other device on a basis of a detection result for the state of the other device and speech prediction of a user.

### Advantageous Effects of Invention

As described above, according to the present disclosure, it is possible to improve the voice recognition accuracy even in a case in which there are other sound sources around the user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram for describing an overview of a voice recognition system according to a first embodiment of the present disclosure.
[FIG. 2] FIG. 2 is an explanatory diagram illustrating a configuration example of a voice recognition system according to the embodiment.
[FIG. 3] FIG. 3 is an explanatory diagram illustrating a configuration example of an information processing device 1 according to the embodiment.
[FIG. 4] FIG. 4 is a flowchart illustrating an operation example of an information processing device 1 according to the embodiment.
[FIG. 5] FIG. 5 is a flowchart illustrating an operation example of an information processing device 1 according to a modified example.
[FIG. 6] FIG. 6 is an explanatory diagram illustrating a configuration example of an information processing device according to a second embodiment of the present disclosure.
[FIG. 7] FIG. 7 is a flowchart illustrating an operation example of an information processing device 2 according to the embodiment.
[FIG. 8] FIG. 8 is an explanatory diagram illustrating a configuration example of an information processing device according to a third embodiment of the present disclosure.
[FIG. 9A] FIG. 9A is an explanatory diagram illustrating an extraction example of a peripheral device 7 based on a position of a peripheral device 7 and a position of a user.
[FIG. 9B] FIG. 9B is an explanatory diagram illustrating an extraction example of a peripheral device 7 based on a position of a peripheral device 7 and a position of a user.
[FIG. 10] FIG. 10 is a flowchart illustrating an operation example of an information processing device 3 according to the embodiment.
[FIG. 11] FIG. 11 is an explanatory diagram illustrating an example of a hardware configuration.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, in this description and the drawings, structural elements that have substantially the same function and structure are sometimes distinguished from each other using different alphabets after the same reference sign. However, when there is no need in particular to distinguish elements that have substantially the same function and structure, the same reference sign alone is attached.

Further, the description will proceed in the following order.
<<1. First embodiment>>
   <1-1. Overview of first embodiment>
   <1-2. Configuration example of first embodiment>
   <1-3. Operation example of first embodiment >
   <1-4. Effects of first embodiment >
   <1-5. Modified examples of first embodiment>
<<2. Second embodiment>>
   <2-1. Configuration example of second embodiment>
   <2-2. Operation example of second embodiment>
   <2-3. Effects of second embodiment>
   <2-4. Supplement to second embodiment>
<<3. Third embodiment>>
   <3-1. Configuration example of third embodiment>
   <3-2. Operation example of third embodiment>
   <3-3. Effects of third embodiment>
   <3-4. Supplement to third embodiment>
<<4. Hardware configuration example>>
<<5. Conclusion>>

### <<1. First embodiment>>

### <1-1. Overview of first embodiment>

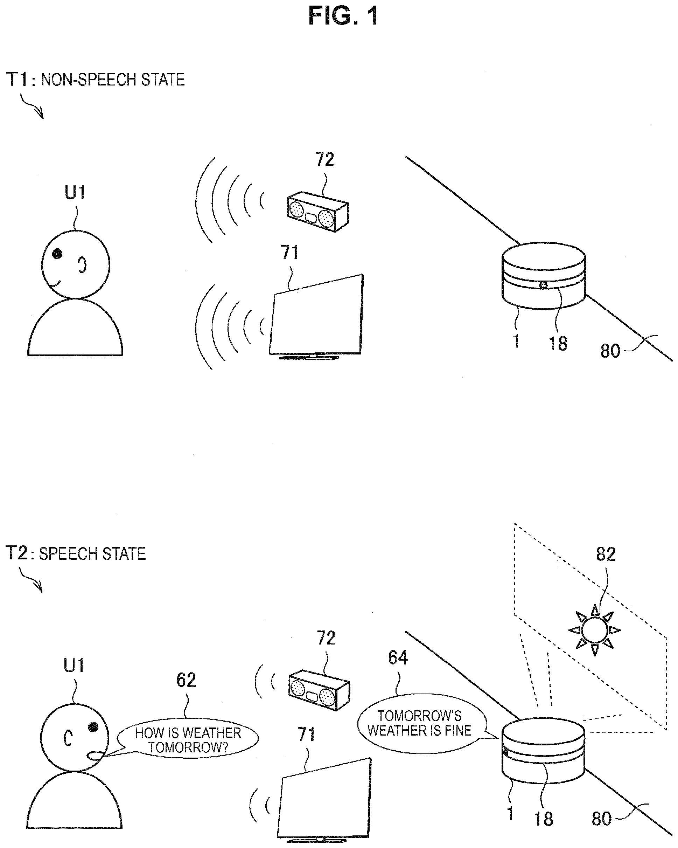

First, an overview of a first embodiment of the present disclosure will be described with reference to FIG. 1. FIG. 1 is an explanatory diagram for describing an overview of a voice recognition system according to the first embodiment of the present disclosure. The information processing device 1 illustrated in FIG. 1 has a voice UI agent function capable of performing voice recognition/semantic analysis on speech of a user and giving a response through voice or display. Further, in FIG. 1, a scene T1 illustrates an example of a voice recognition system in a non-speech state in which a user U1 does not speak to the information processing device 1, and a scene T2 illustrates an example of a voice recognition system in a speech state in which the user U1 speaks to the information processing device 1.

An external appearance of the information processing device 1 is not particularly limited and may be, for example, a columnar shape as illustrated in FIG. 1, and for example, the information processing device 1 is installed on a floor of a room or a table. Further, in the information processing device 1, a light emitting unit 18 constituted by a light emitting element such as a light emitting diode (LED) is installed in the form of a band to surround a central region of a side surface in a horizontal direction. The information processing device 1 can inform the user of a state of the information processing device 1 by causing all or a part of the light emitting unit 18 to emit light. For example, when the information processing device 1 is interacting with the user, the information processing device 1 can cause it look like that its line of sight faces the user U1 who is interacting as in the scene T2 of FIG. 1 by causing a part of the light emitting unit 18 in a direction of the user or a direction of a speaker to emit light. Further, when the information processing device 1 is generating a response or searching for data, the information processing device 1 can inform the user that it is in process by performing control such that light turns above the side surface through the light emitting unit 18. Further, the information processing device 1 has a function of projecting and displaying an image on a wall 80 as illustrated in the scene T2 of FIG. 1, and for example, the information processing device 1 can output a display-based response in addition to a voice-based response.

As illustrated in the scene T1 of FIG. 1, when the user U1 is not speaking to the information processing device 1, for example, a television receiver 71 and an audio device 72 located near the information processing device 1 output music with a large volume.

Here, as illustrated in the scene T1 of FIG. 1, if the user U1 speaks in a state in which the television receiver 71 and the audio device 72 output music with a large volume, the music serves as noise in the voice recognition, and the voice recognition accuracy of the information processing device 1 is likely to be lowered. Further, in the present disclosure, "noise" means, for example, a sound other than a voice in voice input or voice recognition.

In this regard, in the voice recognition system according to the first embodiment of the present disclosure, it is possible to improve the voice recognition accuracy by controlling states of peripheral devices related to an output of noise in the voice recognition on the basis of speech prediction for the user.

Specifically, as illustrated in a scene T2 of FIG. 1, if the user U1 is predicted to speak to the information processing device 1, the volume of the music output from the television receiver 71 and the audio device 72 is controlled to be smaller than in the example illustrated in the scene T1 of FIG. 1. With this configuration, the voice recognition of the information processing device 1 is not easily influenced by the noise (music) output from the television receiver 71 and the audio device 72, and the recognition accuracy is improved. As a result, the information processing device 1 can correctly recognize speech 62 of the user U1 and output a voice-based response 64 or a display-based response 81 as illustrated in the scene T2 of FIG. 1.

As described above, in the voice recognition system according to the present embodiment, for example, if speech of the user is predicted, it is possible to improve the voice recognition accuracy by performing control such that the volume of the device related to the output of the noise is reduced.

The overview of the voice recognition system according to the present disclosure has been described above. Further, a shape of the information processing device 1 is not limited to a cylindrical shape illustrated in FIG. 1 and may be, for example, a cube, a sphere, a polyhedron, or the like. Next, a configuration example of the information processing system and the information processing device 1 according to the first embodiment of the present disclosure will be sequentially described.

### <1-2. Configuration example of first embodiment>

### (Configuration example of voice recognition system)

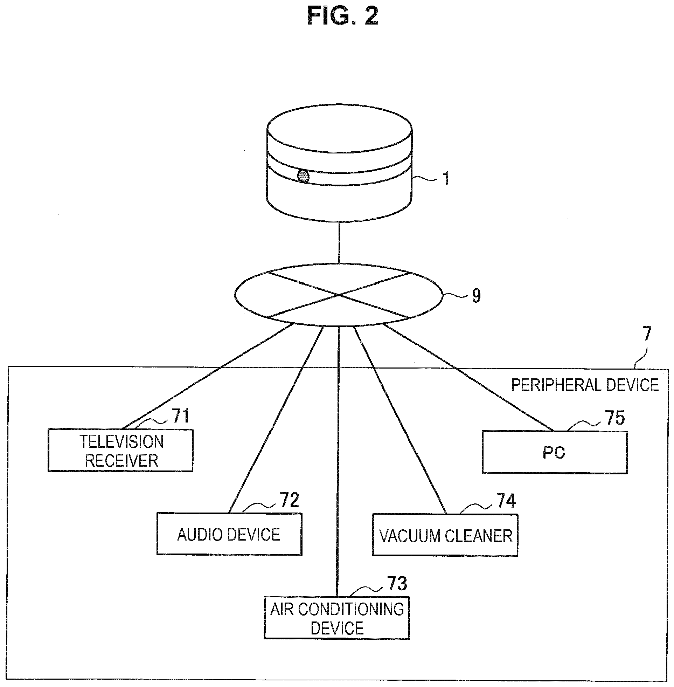

FIG. 2 is an explanatory diagram illustrating a configuration example of the voice recognition system according to the first embodiment of the present disclosure. As illustrated in FIG. 2, the voice recognition system according to the present embodiment includes the information processing device 1, a peripheral device 7, and a communication network 9.

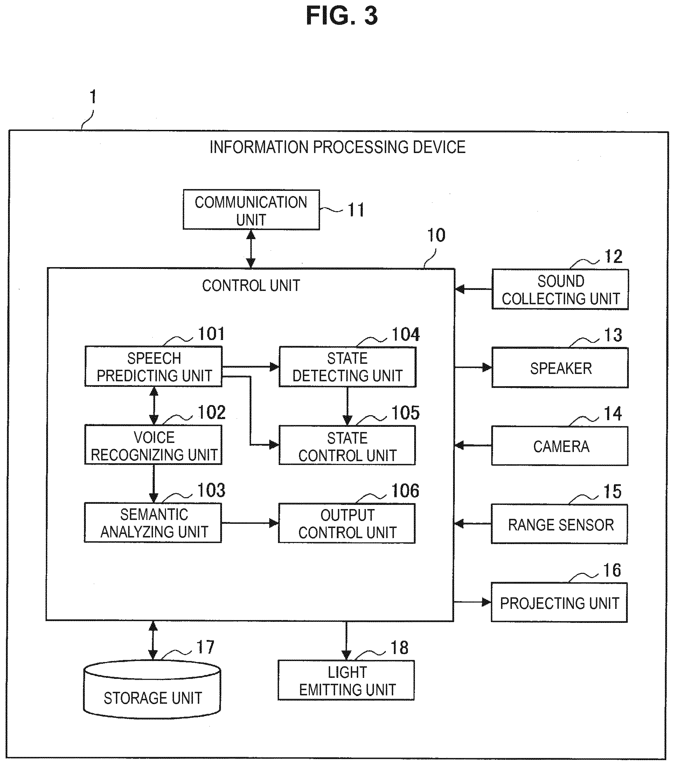

As described with reference to FIG. 1, the information processing device 1 has a function of performing the voice recognition/semantic analysis on the speech of the user and giving a response through voice or an image. Further, as illustrated in FIG. 2, the information processing device 1 is connected to the peripheral device 7 via the communication network 9, and controls the state of the peripheral device 7 on the basis of the speech prediction for the user. Further, the example in which the information processing device 1 is connected to the peripheral device 7 via the communication network 9 is illustrated in FIG. 2, but the information processing device 1 and the peripheral device 7 may be directly connected with each other. Further, a detailed configuration of the information processing device 1 will be described later with reference to FIG. 3.

The peripheral device 7 connected to the information processing device 1 via the communication network 9 is a device that is placed near the information processing device 1 and outputs a sound. The peripheral device 7 may include, for example, a device having a function of outputting a sound such as music or voice such as the television receiver 71 or the audio device 72 (for example, a speaker, a mini-component system, or the like) as illustrated in FIG. 2. Further, the peripheral device 7 may include a device that outputs (generates) a drive sound (an operation sound) associated with an operation of the device such as an air conditioning device 73 (for example, a ventilator, an air conditioner, an air purifier, or the like), a vacuum cleaner 74, or a personal computer (PC) 75. Further, the peripheral device 7 according to the present technology is not limited to the example illustrated in FIG. 2 and may include various devices capable of outputting a sound. Further, in the following description, at least one or more devices included in the peripheral device 7 are also referred to as a "peripheral device 7."

The peripheral device 7 may transmit capability information indicating what the peripheral device 7 can do and state information indicating the state of the peripheral device 7 to the information processing device 1 via the communication network 9. The capability information may include, for example, information such as operations which can be performed by the peripheral device 7 (for example, a sound output, blast, ventilation, and the like), states which the peripheral device 7 can enter, or a type of state information which can be transmitted (or that cannot be transmitted) by the peripheral device 7. Further, the state information may include information such as a volume level, an operation mode (for example, a standby mode, a silent mode, or a common mode), or a state (ON/OFF) of a power switch or a setting value related to other operations which relate to the current peripheral device 7. Further, the peripheral device 7 may transmit the requested capability information or state information upon receiving a transmission request for the capability information or the state information from the information processing device 1.

Further, the peripheral device 7 receives a state control signal from the information processing device 1 via the communication network 9, and the state of the peripheral device 7 is controlled. The state of the peripheral device 7 controlled by the information processing device 1 may include, for example, the volume level, the operation mode, the power ON/OFF, and the like.

Further, a distance between the information processing device 1 and the peripheral device 7 is, for example, within a range that the sound reaches, and the sound output from the peripheral device 7 is collected through a microphone of the information processing device 1 and may serve as noise in the voice recognition by the information processing device 1. In the following description, the sound output from the peripheral device 7 is also referred to as noise without distinguishing music, voice, driving sounds, and the like from one another. Further, the peripheral device 7 is also referred to as another device which can be a source of noise or a device related to the output of the noise.

The communication network 9 is a wired or wireless transmission path of information transmitted from a device or a system connected to the communication network 9. In the present embodiment, since the distance between the information processing device 1 and the peripheral device 7 connected to the communication network 9 is within the range that the sound reaches as described above, for example, the communication network 9 may be various kinds of local area networks (LANs) including Ethernet (registered trademark). Further, the communication network 9 is not limited to a LAN, and the communication network 9 may include a public network such as the Internet, a telephone network, or a satellite communication network, a wide area network (WAN), or the like. Further, the communication network 9 may include a dedicated network such as an Internet protocol-virtual private network (IP-VPN).

### (Configuration example of information processing device)

The configuration of the voice recognition system according to the present embodiment has been described above. Next, a configuration example of the information processing device 1 included in the voice recognition system according to the present embodiment will be described with reference to FIG. 3. FIG. 3 is an explanatory diagram illustrating a configuration example of the information processing device 1 according to the present embodiment.

As illustrated in FIG. 3, the information processing device 1 includes a control unit 10, a communication unit 11, a sound collecting unit 12, a speaker 13, a camera 14, a range sensor 15, a projecting unit 16, a storage unit 17, and the light emitting unit 18.

The control unit 10 controls the components of the information processing device 1. Further, as illustrated in FIG. 3, the control unit 10 according to the present embodiment also functions as a speech predicting unit 101, a voice recognizing unit 102, a semantic analyzing unit 103, a state detecting unit 104, a state control unit 105, and an output control unit 106.

The speech predicting unit 101 performs the speech prediction for the user (for example, predicts that the user is about to speak). Further, in a case in which the speech of the user is predicted, the speech predicting unit 101 may give a notification indicating that the speech of the user is predicted to the voice recognizing unit 102, the state detecting unit 104, and the state control unit 105. The speech prediction for the user by the speech predicting unit 101 can be performed in various methods.

For example, the speech predicting unit 101 may predict the speech of the user in a case in which the voice recognizing unit 102 to be described later detects a predetermined activation word (for example, "hello agent" or the like) from the voice of the user collected by the sound collecting unit 12 to be described later. Further, the speech predicting unit 101 may predict the speech of the user in a case in which it is detected that a voice input button (not illustrated) disposed in the information processing device 1 is pushed by the user. Further, the speech predicting unit 101 may predict the speech of the user in a case in which it is detected that the user is waving her or his hand on the basis of data obtained by the camera 14 and the range sensor 15 to be described later. Further, the speech predicting unit 101 may predict the speech of the user in a case in which it is detected that the user claps her or his hands on the basis of data obtained by the camera 14 or the range sensor 15 to be described later or a sound collected by the sound collecting unit 12. Further, the speech prediction for the user by the speech predicting unit 101 is not limited to the above examples, and the speech of the user may be predicted in various methods.

The voice recognizing unit 102 recognizes the voice of the user collected by the sound collecting unit 12 to be described later, converts the voice into a character string, and acquires speech text. Further, it is also possible to identify a person who is speaking on the basis of a voice feature of the voice recognizing unit 102 or to estimate a source of the voice, that is, a direction of the speaker.

Further, in a case in which a predetermined activation word is included in the acquired speech text, the voice recognizing unit 102 gives a notification indicating that the activation word has been detected to the speech predicting unit 101. Further, the voice recognizing unit 102 may compare the activation word with other speech text and detect the activation word more reliably with respect to the noise.

The semantic analyzing unit 103 performs semantic analysis on the speech text acquired by the voice recognizing unit 102 using a natural language process or the like. A result of the semantic analysis by the semantic analyzing unit 103 is provided to the output control unit 106.

The state detecting unit 104 detects the state of the peripheral device 7 (other devices) which can be the source of the noise and provides a detection result to the state control unit 105. For example, the state detecting unit 104 detects the state of the peripheral device 7 on the basis of sound collection. The detection of the state of the peripheral device 7 based on the sound collection may be performed, for example, by specifying a magnitude (a sound pressure level) of ambient sound (noise around the information processing device 1) collected by the sound collecting unit 12. Further, the state detecting unit 104 may provide the magnitude of the specified ambient sound to the state control unit 105 as the detection result.

Further, the state detecting unit 104 may detect the state of the peripheral device 7 on the basis of communication. The detection of the state of the peripheral device 7 based on the communication may be performed, for example, such that the communication unit 11 to be described later is controlled such that a transmission request for the capability information and the state information is transmitted to the peripheral device 7, and the capability information and the state information are acquired from the peripheral device 7 via the communication unit 11. Further, the state detecting unit 104 may provide the capability information and the state information to the state control unit 105 as the detection result.

The state control unit 105 controls the state of the peripheral device 7 (other device) on the basis of the detection result by the state detecting unit 104 and the speech prediction for the user by the speech predicting unit 101. For example, in a case in which the speech predicting unit 101 predicts the speech of the user, and the magnitude of the ambient sound serving as the detection result by the state detecting unit 104 is larger than a predetermined threshold value, the state control unit 105 may control the state of the peripheral device 7 such that the noise output from the peripheral device 7 is further reduced.

Further, the state control of the peripheral device 7 by the state control unit 105 may be performed in various methods. Further, a method of controlling the state of the peripheral device 7 by the state control unit 105 may be decided on the basis of the capability information of the peripheral device 7 acquired via the communication unit 11 or from the storage unit 17.

For example, in a case in which the peripheral device 7 is determined to be a device whose volume level can be controlled via communication on the basis of the capability information of the peripheral device 7, the state control unit 105 may control the state of the peripheral device 7 such that the volume level of the peripheral device 7 is decreased or increased. In this case, for example, the state control unit 105 may generate a control signal for causing the volume level of the peripheral device 7 to be decreased or increased and control the communication unit 11 such that the control signal is transmitted to the peripheral device 7.

Further, in a case in which the peripheral device 7 is determined to be a device whose operation mode can be controlled via communication on the basis of the capability information of the peripheral device 7, the state control unit 105 may control the state of the peripheral device 7 by causing the operation mode of the peripheral device 7 to be changed. In this case, for example, the state control unit 105 may generate a control signal for causing the operation mode to be changed to an operation mode in which the noise output from the peripheral device 7 is further decreased and control the communication unit 11 such that the control signal is transmitted to the peripheral device 7. Further, for example, in a case in which the peripheral device 7 operates in one of three operation modes, that is the standby mode, the silent mode, and the common mode, the noise output by the peripheral device 7 may increase in the order of the standby mode, the silent mode, and the common mode.

Further, in a case in which a setting value related to an operation of the peripheral device 7 is determined to be controlled via communication on the basis of the capability information of the peripheral device 7, the state control unit 105 may control the state of the peripheral device 7 by causing the setting value related to the operation of the peripheral device 7 to be changed. The setting value related to the operation of the peripheral device 7 may include, for example, a strength of an air volume, the number of revolutions, power consumption, and the like. In this case, for example, the state control unit 105 may generate a control signal for causing the setting value related to the operation of the peripheral device 7 to be changed to a setting value in which the noise output from the peripheral device 7 is further decreased and control the communication unit 11 such that the control signal is transmitted to the peripheral device 7.

Further, in a case in which the peripheral device 7 is determined to be a device in which ON/OFF of the power supply can be controlled via communication on the basis of the capability information of the peripheral device 7, the state control unit 105 may generate a control signal for causing the power supply of the peripheral device 7 to be changed to ON or OFF and control the communication unit 11 such that the control signal is transmitted to the peripheral device 7. Further, the state control unit 105 may determine whether the peripheral device 7 is powered off on the basis of the capability information of the peripheral device 7 or the like. For example, in a case in which the peripheral device 7 is determined not to be powered off, the state control unit 105 may perform the state control of the peripheral device 7 using another state control method described above. Further, the state control unit 105 may perform the state control of the peripheral device 7 using another state control method described above preferentially rather than the control of the power supply. With this configuration, since the peripheral device 7 is simply controlled without completely stopping the operation, the user is unlikely to receive an uncomfortable feeling or inconvenience due to the stop of the peripheral device 7.

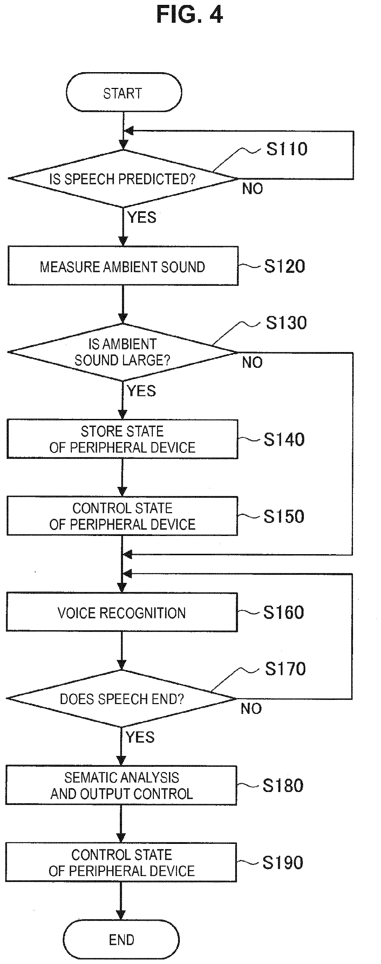

Further, the state control unit 105 may control the state of the peripheral device 7 such that the noise output from the peripheral device 7 is further reduced after causing the state information of the peripheral device acquired from the state detecting unit 104 to be stored in the storage unit 17. Further, in a case in which the speech of the user ends, the state control unit 105 may control the state of the peripheral device 7 on the basis of the state information of the peripheral device 7 stored in the storage unit 17 such that the state of the peripheral device 7 returns to the state at a time point at which the state of the peripheral device 7 is stored in the storage unit 17. The state control example of the peripheral device will be described in detail later with reference to FIG. 4.

The output control unit 106 controls a response to the speech of the user or an output related to an operation required by the user in accordance with the semantic analysis result provided from the semantic analyzing unit 103. For example, in a case in which the speech of the user is to obtain "tomorrow's weather," the output control unit 106 acquires information related to "tomorrow's weather" from a weather forecast server on a network, and controls the speaker 13, the projecting unit 16, or the light emitting unit 18 such that the acquired information is output.

The communication unit 11 performs reception and transmission of data with an external device. For example, the communication unit 11 is connected to the communication network 9 and performs transmission to the peripheral device 7 or reception from the peripheral device 7. For example, the communication unit 11 transmits the transmission request for the capability information and the state information to the peripheral device 7. Further, the communication unit 11 receives the capability information and the state information from the peripheral device 7. The communication unit 11 also transmits the control signal generated by the state control unit 105 to the peripheral device 7. Further, the communication unit 11 is connected to a predetermined server (not illustrated) via the communication network 9 or another communication network, and receives information necessary for the output control by the output control unit 106.

The sound collecting unit 12 has a function of collecting the ambient sound and outputting the collected sound to the control unit 10 as an audio signal. Further, for example, the sound collecting unit 12 may be implemented by one or more microphones.

The speaker 13 has a function of converting the audio signal into a voice and outputting the voice under the control of the output control unit 106.

The camera 14 has a function of imaging a surrounding area with an imaging lens installed in the information processing device 1 and outputting the captured image to the control unit 10. Further, the camera 14 may be implemented by, for example, a 360 degree camera, a wide angle camera, or the like.

The range sensor 15 has a function of measuring a distance between the information processing device 1 and the user or a person around the user. The range sensor 15 is implemented by, for example, an optical sensor (a sensor that measures a distance to an object on the basis of phase difference information at a light emission/reception timing).

The projecting unit 16 is an example of a display device and has a function of performing display by projecting (enlarging) an image on a wall or a screen.

The storage unit 17 stores a program or a parameter causing each component of the information processing device 1 to function. Further, the storage unit 17 also stores information related to the peripheral device 7. For example, the information related to the peripheral device 7 may include information for establishing a connecting with the peripheral device 7 connected to the communication network 9, the capability information, the state information, and the like.

The light emitting unit 18 is implemented by a light emitting element such as an LED and can perform full lighting, partial lighting, blinking, lighting position control, and the like. For example, the light emitting unit 18 can cause it look like that the line of sight faces in the direction of the speaker by lighting a part thereof in the direction of the speaker recognized by the voice recognizing unit 102 in accordance with the control of the control unit 10.

The configuration of the information processing device 1 according to the present embodiment has been specifically described above. Further, the configuration of the information processing device 1 illustrated in FIG. 3 is an example, and the present embodiment is not limited thereto. For example, the information processing device 1 may further include an infrared (IR) camera, a depth camera, a stereo camera, a human sensor or the like in order to obtain information related to the surrounding environment. Further, the information processing device 1 may further include a touch panel display, a physical button, or the like as a user interface. Further, the installation positions of the sound collecting unit 12, the speaker 13, the camera 14, the light emitting unit 18, and the like installed in the information processing device 1 are not particularly limited. Further, the functions of the control unit 10 according to the present embodiment may be performed by another information processing device connected via the communication unit 11.

### <1-3. Operation example of first embodiment>

Next, an operation example of the information processing device 1 according to the present embodiment will be described with reference to FIG. 4.

FIG. 4 is a flowchart illustrating an operation example of the information processing device 1 according to the present embodiment. As illustrated in FIG. 4, first, the control unit 10 performs a speech prediction process of determine whether or not the user is about to speak (S110). The speech prediction process of step S110 is repeated until the speech of the user is predicted.

In a case in which the speech of the user is predicted (YES in step S110), the information processing device 1 measures the ambient sound (S120). For example, the state detecting unit 104 may measure the ambient sound by specifying the magnitude of the ambient sound on the basis of the audio signal collected by the sound collecting unit 12.

Then, the state control unit 105 determines whether or not the ambient sound measured in step S120 is large (S130). For example, the state control unit 105 may perform the determination in step S130 by comparing the ambient sound measured in step S120 with a predetermined threshold value.

In a case in which the ambient sound is determined to be large (YES in step S130), the state control unit 105 causes the state information of the peripheral device 7 acquired on the basis of the communication from the peripheral device 7 through the state detecting unit 104 to be stored in the storage unit 17 (step S140).

Then, the state control unit 105 controls the state of the peripheral device 7 (S150). For example, the state control unit 105 may generate a control signal for causing the volume level to be decreased by a predetermined value for all the peripheral devices 7 whose state can be controlled and cause the communication unit 11 to transmit the control signal. Further, the state control unit 105 may generate a control signal for reducing the ambient sound (noise) for each of the peripheral devices 7 on the basis of the capability information and the state information of the peripheral device 7 acquired in step S140 and cause the communication unit 11 to transmit the control signal.

Then, the information processing device 1 receives a voice input of the user and performs a voice recognition process (S160). In step S170, for example, in a case in which a non-speech period continues for a predetermined time (for example, 10 seconds) or more, the control unit 10 determines that speech of the user ends, and continues the voice recognition process of step S160 until the speech ends.

In a case in which the speech of the user is determined to end (YES in S170), the semantic analyzing unit 103 performs a semantic analysis process on the basis of the recognition result (speech text) of the voice recognizing unit 102, and the output control unit 106 controls the projecting unit 16 and the light emitting unit 18 in accordance with the semantic analysis result (S180).

Finally, the state control unit 105 performs the state control such that the state of the peripheral device 7 returns to the state at a time point of step S140 on the basis of the state information of the peripheral device 7 stored in the storage unit 17 in step S140 (S190). For example, the state control unit 105 may generate a control signal of causing the state of the peripheral device 7 to be changed to the state of the peripheral device 7 at a time point of step S140 for each of the peripheral devices 7 and cause the communication unit 11 to transmit the generated control signal.

The series of processes described above (S110 to S190) may be repeated, for example, each time a series of processes ends.

### <1-4. Effects of first embodiment>

As described above, according to the first embodiment of the present disclosure, in a case in which the speech of the user is predicted, the magnitude of the ambient sound (noise) of the information processing device 1 is measured, and in a case in which the ambient sound is large, the state of the peripheral device 7 which can be the source of the noise is controlled such that the ambient sound is reduced. With this configuration, even in a case in which there are other sound sources around the user, it is possible to improve the voice recognition accuracy when the user speaks. Further, in a case in which the information processing device 1 outputs a voice-based response corresponding to the speech of the user, the ambient sound is reduced, so that the user can more easily hear the voice-based response output from the information processing device 1.

### <1-5. Modified examples of first embodiment>

The first embodiment of the present disclosure has been described above. Several modified examples of the first embodiment of the present disclosure will be described below. Further, each of the modified examples to be described below may be applied alone to the first embodiment of the present disclosure or may be applied in combination to the first embodiment of the present disclosure. Further, each modified example may be applied instead of the configuration described in the first embodiment of the present disclosure or may be additionally applied to the configuration described in the first embodiment of the present disclosure.

### (First modified example)

In the above operation example, the example in which the state control process of the peripheral device 7 for reducing the noise in step S150 illustrated in FIG. 4 is performed only once, but the present embodiment is not limited to this example. As the first modified example, the information processing device 1 may control the state of the peripheral device 7 twice or more in order to reduce the noise.

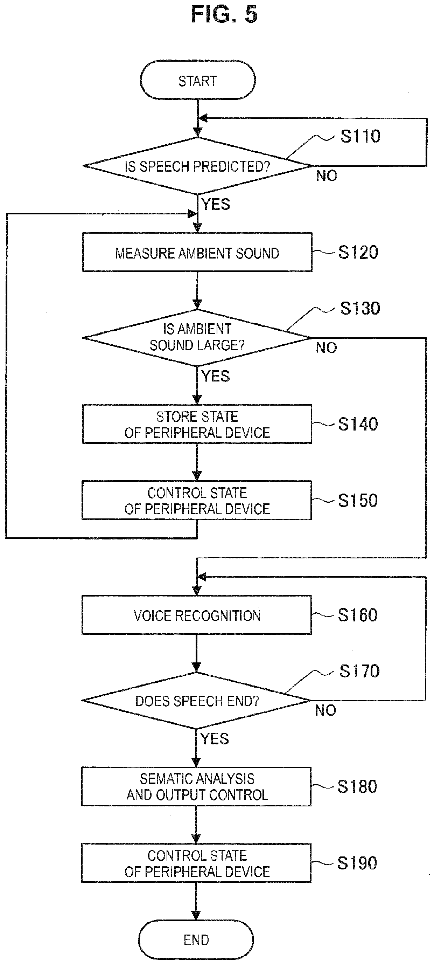

FIG. 5 is a flowchart illustrating an operation example of the information processing device 1 according to the present modified example. Since processes of respective steps illustrated in FIG. 5 are similar as the processes of respective steps having the same step numbers illustrated in FIG. 4, description thereof will be omitted. In the operation example illustrated in FIG. 5, unlike the operation example illustrated in FIG. 4, after the state control process of the peripheral device 7 (S150), the process returns to step S120, and the ambient sound measurement (S120) and the ambient sound magnitude determination S130) are performed. Then, in a case in which it is determined again that the ambient sound is large (YES in S130), the storage of the state of the peripheral device (S140) and the state control process of the peripheral device 7 (S150) are performed again.

With this operation, it is possible to repeat the state control process for the peripheral device until the ambient sound is sufficiently reduced, and thus the accuracy of the voice recognition process and the semantic analysis process of step S160 and subsequent steps is further improved.

Further, a method of controlling the state of the peripheral device 7 twice or more in order to reduce the noise is not limited to the above example. For example, in order to reduce the noise, the state control unit 105 may control the state of the peripheral device 7 twice or more on the basis of the voice recognition or the semantic analysis result based on the speech of the user.

For example, in step S160, the state control of the peripheral device 7 may be performed again in a case in which the voice recognition process fails (the speech text is unable to be acquired) despite the user is speaking. Further, for example, the speech of the user may be detected on the basis of a motion of the mouth of the user included in an image acquired by the camera 14.

Further, in step S180, in a case in which the semantic analysis from speech text fails (the semantic analysis result is unable to be obtained), the state control of the peripheral device 7 may be performed again.

### (Second modified example)

In the above example, the state control unit 105 acquires the state information of the peripheral device 7 and causes the state information to be stored in the storage unit 17, but the present embodiment is not limited to this example. As second modified example, the state control unit 105 may cause a parameter in the control signal related to the state control to be stored instead of the state information of the peripheral device 7.

For example, in step S150 of FIG. 4, in a case in which the state control unit 105 generates a control signal for causing the volume level to be decreased by a predetermined value or more for the peripheral device 7, the parameter may be the predetermined value. Further, in this case, in step S190 of FIG. 4, the state control unit 105 may generate a control signal for causing the volume level to be increased by the predetermined value (parameter) stored in the storage unit 17 and cause the communication unit 11 to transmit the control signal. With this configuration, even in a case in which the state information of the peripheral device 7 is unable to be acquired via communication due to the function restriction of the peripheral device 7 or the like, the state of the peripheral device 7 can be returned to the state at a time point of step S140 of FIG. 4.

### «2. Second embodiment»

Thus, the first embodiment of the present disclosure and the modified examples have been described. Then, a second embodiment of the present disclosure will be described. In the first embodiment described above, all the peripheral devices 7 which can be controlled by the information processing device 1 are set as the control target on the basis of the magnitude of the ambient sound. On the other hand, an information processing device according to the second embodiment extracts the peripheral device 7 serving as the control target on the basis of the state information of each of the peripheral devices 7 obtained via communication and controls the state of the extracted peripheral device 7.

### <2-1. Configuration example of second embodiment>

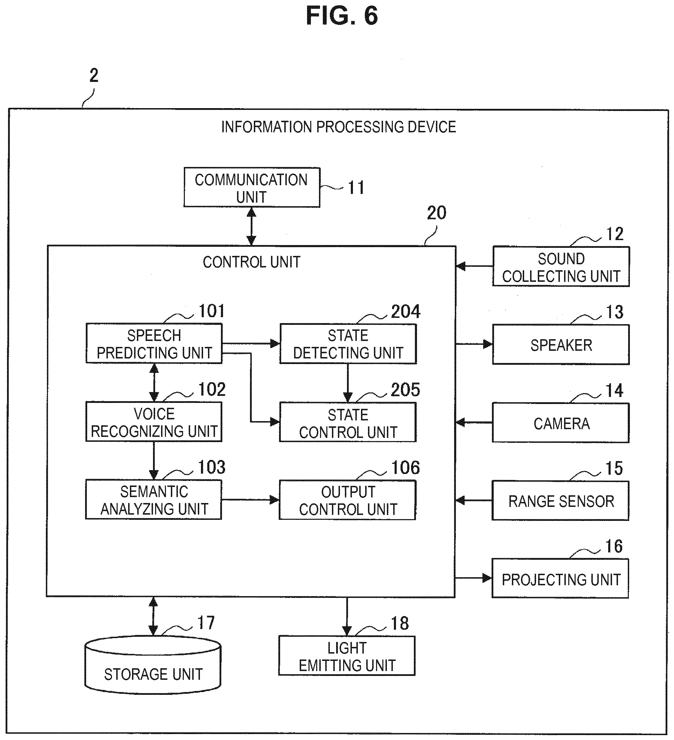

FIG. 6 is an explanatory diagram illustrating a configuration example of the information processing device according to the second embodiment of the present disclosure. As illustrated in FIG. 6, the information processing device 2 according to the present embodiment is different from the information processing device 1 of FIG. 3 in that a functional configuration of a control unit 20 is partially different from the functional configuration of the control unit 10 of FIG. 3. Further, since components substantially similar to those illustrated in FIG. 3 among the components illustrated in FIG. 6 are denoted by the same reference numerals, description thereof will be omitted. Functions of a state detecting unit 204 and a state control unit 205 of the control unit 20 according to the present embodiment will be described below.

### (State detecting unit 204)

Similarly to the state detecting unit 104 described in the first embodiment, the state detecting unit 204 according to the present embodiment detects the state of the peripheral device 7 (other devices) which can be the source of the noise. For example, similarly to the state detecting unit 104, the state detecting unit 204 detects the state of the peripheral device 7 on the basis of communication and acquires the capability information and the state information of the peripheral device 7 through the communication unit 11. Further, the state detecting unit 204 may provide the capability information and the state information to the state control unit 205 as the detection result.

Further, the state detecting unit 204 according to the present embodiment may or may not have the function of detecting the state of the peripheral device 7 on the basis of the sound collection as described in the first embodiment.

### (State control unit 205)

Similarly to the state control unit 105 described in the first embodiment, the state control unit 205 according to the present embodiment controls the state of the peripheral device 7 (other devices) on the basis of the detection result by the state detecting unit 204 and the speech prediction for the user by the speech predicting unit 101. Unlike the state control unit 105 according to the first embodiment, the state control unit 205 according to the present embodiment has a function of extracting the peripheral device 7 whose state is controlled from a plurality of peripheral devices 7 on the basis of the state of the peripheral device 7. For example, in a case in which the speech predicting unit 101 predicts the speech of the user, the state control unit 205 according to the present embodiment extracts the peripheral device 7 satisfying a predetermined condition based on the state information of the peripheral device 7, and controls the state of the extracted peripheral device 7.

For example, the predetermined condition based on the state information of the peripheral device 7 may be a condition that a current volume level is a predetermined threshold value or more. Further, the predetermined condition based on the state information of the peripheral device 7 may be a condition that the operation mode of the peripheral device 7 is a predetermined operation mode. Further, the predetermined condition based on the state information of the peripheral device 7 may be a condition that a magnitude of a predetermined setting value related to the operation of the peripheral device 7 is a predetermined threshold value or more.

With this configuration, for example, it is possible to control the state of the peripheral device 7 which is outputting a larger noise preferentially or efficiently. Further, since only the state of the peripheral device 7 which may be outputting a larger noise is changed, and the state of the peripheral device 7 which may be outputting a smaller noise is not changed, there is an effect in that the user is unlikely to have an uncomfortable feeling.

Further, the state control unit 205 according to the present embodiment may cause the state information of the peripheral device 7 extracted as described above to be stored in the storage unit 17.

Further, since the other functions of the state control unit 205 according to the present embodiment (the state control method and the decision of the state control method of the peripheral device 7) are similar to those of the state control unit 105 described in the first embodiment, description thereof is omitted.

### <2-2. Operation example of second embodiment>

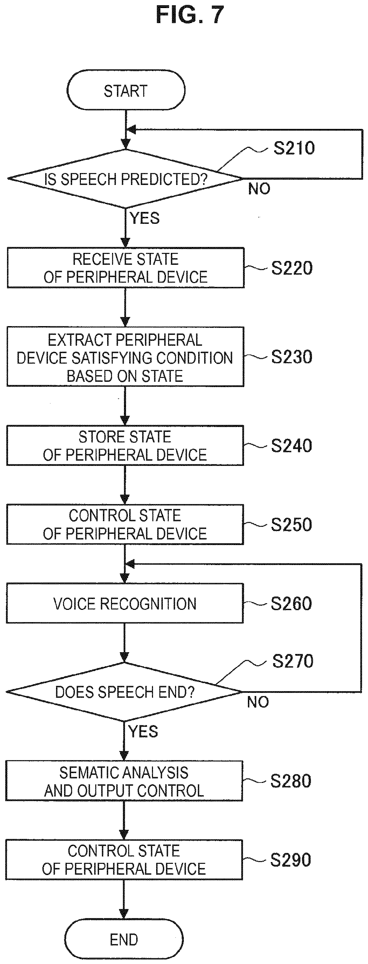

The configuration example of the information processing device 2 according to the second embodiment of the present disclosure has been described above. Next, an operation example of the information processing device 2 according to the present embodiment will be described with reference to FIG. 7.

FIG. 7 is a flowchart illustrating an operation example of the information processing device 2 according to the present embodiment. First, similarly to step S110 described above with reference to FIG. 4, the control unit 20 repeats the speech prediction process until the speech of the user is predicted (S210).

In a case in which the speech of the user is predicted (YES in step S210), the state detecting unit 204 transmits the transmission request for the capability information and the state information to the peripheral devices 7, and receives the capability information and the state information from the peripheral devices 7 (S220).

Then, the state control unit 205 extracts the peripheral device 7 satisfying the condition based on the state information among the peripheral devices 7 (S230). The condition based on the state information may be, for example, any one of the conditions described above. Further, the state control unit 205 causes the state information of the extracted peripheral device 7 to be stored in the storage unit 17 (S240).

Then, the state control unit 205 controls the states of the extracted peripheral devices 7 (S250). For example, the state control unit 205 may generate a control signal for reducing the ambient sound (noise) for each of the extracted peripheral devices 7 on the basis of the capability information and the state information of the peripheral devices 7 received in step S220 and cause the communication unit 11 to transmit the control signal.

A subsequent process of steps S260 to 290 illustrated in FIG. 7 is similar to the process of steps S160 to 190 described above with reference to FIG. 4, and thus description thereof is omitted.

### <2-3. Effects of second embodiment>

As described above, according to the second embodiment of the present disclosure, if the speech of the user is predicted, the state information of the peripheral device 7 around the information processing device 2 is acquired, and the state control is performed such that the noise output from the peripheral device 7 extracted on the basis of the state information is reduced. With this configuration, even in a case in which there are other sound sources around the user, it is possible to improve the voice recognition accuracy when the user speaks. Further, according to the second embodiment of the present disclosure, the peripheral device 7 whose state is changed is extracted, and the state control is performed, and thus there is an effect in that the user is unlikely to have an uncomfortable feeling.

### <2-4. Supplement to second embodiment>

Further, in the above example, the example in which the state detecting unit 204 may not have the function of detecting the state of the peripheral device 7 on the basis of sound collection as described in the first embodiment has been described, but the present embodiment is not limited to this example. For example, the state detecting unit 204 may measures the ambient sound with the state detection function based on the sound collection, and in a case in which the ambient sound is determined to be large, the state control unit 205 may extract the peripheral device 7 whose state is changed and perform the state control.

Further, it is also possible to apply each of the modified examples described in the first embodiment to the second embodiment.

### <<3. Third embodiment>>

The first embodiment and the second embodiment of the present disclosure have been described above. Next, a third embodiment of the present disclosure will be described. The information processing device in accordance with the third embodiment further controls the state of the peripheral device 7 on the basis of a position of the peripheral device 7.

### <3-1. Configuration example of third embodiment>

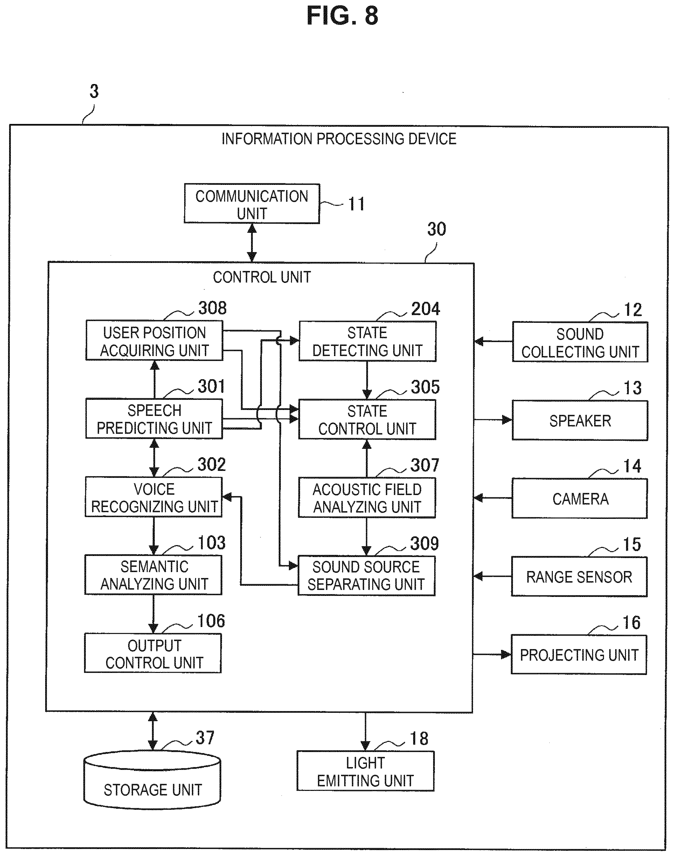

FIG. 8 is an explanatory diagram illustrating a configuration example of an information processing device in accordance with the third embodiment of the present disclosure. Since components substantially similar to those illustrated in FIGS. 4 and 6 among the components illustrated in FIG. 8 are denoted by the same reference numerals, description thereof will be omitted. A control unit 30 and a storage unit 37 included in an information processing device 2 according to the present embodiment will be described below.

### (Control unit 30)

The control unit 30 according to the present embodiment controls respective components of the information processing device 3. Further, the control unit 30 according to the present embodiment functions as a speech predicting unit 301, a voice recognizing unit 302, a semantic analyzing unit 103, a state detecting unit 204, a state control unit 305, and an output control unit 106 as illustrated in FIG. 8. The functions of the semantic analyzing unit 103 and the output control unit 106 among these functions are similar to the functions of the semantic analyzing unit 103 and the output control unit 106 according to the first embodiment, and the function of the state detecting unit 204 is similar to the function of the state detecting unit 204 according to the second embodiment, and thus description thereof is omitted.

Similarly to the speech predicting unit 101 described in the first embodiment, the speech predicting unit 301 according to the present embodiment performs the speech prediction for the user. In addition to the function of the speech predicting unit 101, the speech predicting unit 301 according to the present embodiment has a function of giving a notification indicating that the speech of the user is predicted to a user position acquiring unit 308 in a case in which the speech of the user is predicted.

Similarly to the voice recognizing unit 102 described in the first embodiment, the voice recognizing unit 302 according to the present embodiment recognizes the voice of the user, converts the voice of the user into a character string, and acquires a speech text. The voice recognizing unit 302 according to the present embodiment is different from the voice recognizing unit 102 described in the first embodiment in that the voice recognizing unit 302 receives and recognizes the voice of the user separated and acquired by the sound source separating unit 309 described below from the voice acquired by the sound collecting unit 12. With this configuration, it is possible to further improve the voice recognition accuracy.

Similarly to the state control unit 105 described in the first embodiment, the state control unit 305 controls the state of the peripheral device 7 (other devices) on the basis of the detection result by the state detecting unit 204 and the speech prediction for the user by the speech predicting unit 301. The state control unit 305 according to the present embodiment has a function of controlling the state of the peripheral device 7 on the basis of the position of the peripheral device 7 in addition to the function of the state control unit 105 according to the first embodiment. For example, information of the position related to the peripheral device 7 may be stored in a storage unit 37 to be described later.

For example, in a case in which the speech predicting unit 101 predicts the speech of the user, the state control unit 305 according to the present embodiment extracts the peripheral devices 7 satisfying a predetermined condition on the basis of the position of the peripheral device 7, and controls the states of the extracted peripheral devices 7. Several examples will be described below as examples in which the state control unit 305 extracts the peripheral device 7 on the basis of the position of the peripheral device 7 and controls the state of the extracted peripheral device 7.

For example, the state control unit 305 may extract the peripheral device 7 located in a noise occurrence region specified on the basis of the sound collection, and control the extracted state. The information of the noise occurrence region may be provided from an acoustic field analyzing unit 307 to be described later, and the state control unit 305 may associate the information of the noise occurrence region with the information of the position of the peripheral device 7 and extract the peripheral device 7 located within the noise occurrence region.

With this configuration, for example, it is possible to control the state of the peripheral device 7 which is outputting a larger noise preferentially or efficiently. Further, since only the state of the peripheral device 7 which is outputting a larger noise is changed, and the state of the peripheral device 7 which is outputting a smaller noise is not changed, there is an effect in that the user is unlikely to have an uncomfortable feeling.

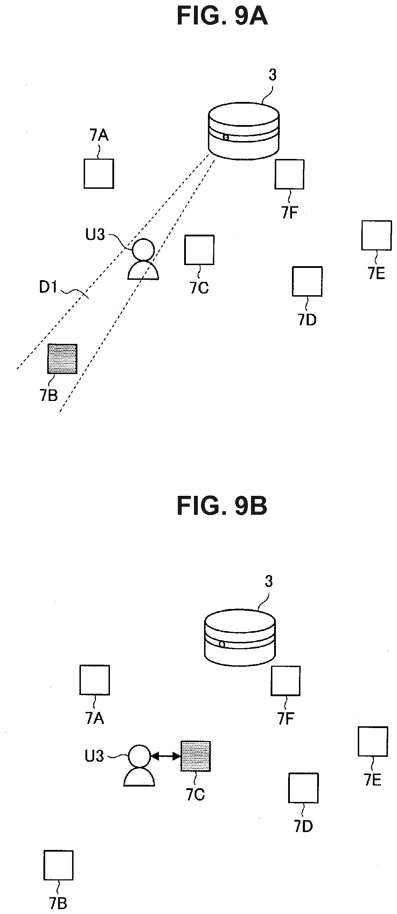

Further, the state control unit 305 may control the state of the peripheral device 7 on the basis of the position of the peripheral device 7 and the position of the user. The position of the user may be provided from the user position acquiring unit 308 to be described later to the state control unit 305. FIGS. 9A and 9B are explanatory views illustrating an example of extracting the peripheral device 7 on the basis of the position of the peripheral device 7 and the position of the user. As illustrated in FIGS. 9A and 9B, there are peripheral devices 7A to 7F and a user U3 around the information processing device 3.

For example, as illustrated in FIG. 9A, the state control unit 305 may extract the peripheral device 7 located in substantially the same direction as the position of the user with reference to the position of the sound collecting unit 12 and control the state of the extracted peripheral device 7. The state control unit 305 may regard an angle range D1 including the position of the user U3 centering on the position of the sound collecting unit 12 (not illustrated) installed in the information processing device 3 as substantially the same direction as the position of the user with reference to the position of the sound collecting unit 12. Further, the state control unit 305 may extract the peripheral device 7B located with the angle range D1 as the peripheral device 7 located in substantially the same direction as the position of the user with reference to the position of the sound collecting unit 12 and the position of the user. Further, the size of the angle range D1 may be, for example, a preset predetermined size or may be dynamically set so that the face, the whole body, or the like of the user U3 is included.

With this configuration, it is possible to efficiently control the state of the peripheral device 7 such that the noise output by the peripheral device 7 located in substantially the same direction as the position of the user with reference to the position of the sound collecting unit 12 is reduced. As compared with the sound going toward the sound collecting unit 12 in other directions, it is difficult to separate the sound going toward the sound collecting unit 12 in the substantially same direction as the position of the user from the voice of the user through the sound source separating unit 309 to be described later. Therefore, with this configuration, the sound source separation accuracy is improved, and the voice recognition accuracy is also improved consequently.

Further, as illustrated in FIG. 9B, the state control unit 305 may extract the peripheral device 7 located near the position of the user and control the state of the extracted peripheral device 7. For example, the state control unit 305 may extract the peripheral device 7C located within a range of a predetermined distance from the user U3 illustrated in FIG. 9B as the peripheral device 7 located near the position of the user U3. Further, the state control unit 305 may extract the peripheral device 7C located closest to the user U3 illustrated in FIG. 9B as the peripheral device 7 located near the position of the user U3.

With this configuration, it is possible to efficiently reduce the noise output from the peripheral device 7 close to the user, and the user is likely to easily speak.

Further, the method of extracting the peripheral device 7 on the basis of the position of the peripheral device 7 by the state control unit 305 is not limited to the above example. For example, the state control unit 305 may extract the peripheral device 7 located near the sound collecting unit 12 and control the state of the extracted peripheral device 7. Further, the state control unit 305 may extract the peripheral device 7 using a combination of the above-described extraction methods.

The acoustic field analyzing unit 307 analyzes the acoustic field (a space or a region in which sound waves exist) around the information processing device 3 on the basis of the voice collected by the sound collecting unit 12. For example, the acoustic field analyzing unit 307 analyzes the acoustic field on the basis of the voice acquired from each of a plurality of microphones installed in the sound collecting unit 12. The analysis result for the acoustic field may be provided to the sound source separating unit 309. Further, the acoustic field analyzing unit 307 specifies a direction having a high sound pressure level with reference to the sound collecting unit 12, and provides a region included in a predetermined angle range centered on the direction to the state control unit 305 as the noise occurrence region.

The user position acquiring unit 308 acquires the position of the user on the basis of the data acquired from the camera 14 and the range sensor 15. For example, the user position acquiring unit 308 may detect the user from the image acquired by the camera 14 using a face detection technique, a face recognition technique, or the like, associate the detected user with the data acquired from the range sensor 15, and acquire the position of the user. The user position acquiring unit provides the acquired user position to the state control unit 305 and the sound source separating unit 309.

The sound source separating unit 309 obtains the voice of the user by separating the voice of the user on the basis of the acoustic field analysis result by the acoustic field analyzing unit 307 and the position of the user. For example, the sound source separating unit 309 may separate the voice of the user from the noise on the basis of a beam forming method. The voice of the user separated by the sound source separating unit 309 is provided to the voice recognizing unit 302.

### (Storage unit 37)

Similarly to the storage unit 17 described in the first embodiment, the storage unit 37 stores a program or a parameter causing the respective components of the information processing device 3 to function. In addition to the information stored in the storage unit 17, the storage unit 37 stores map information of an area around the information processing device 3. Further, in addition to the information stored in the storage unit 17, the storage unit 37 further stores information of the position of the peripheral device 7 as the information related to the peripheral device 7. Further, for example, the information of the position of the peripheral device 7 stored in the storage unit 17 may be information related to a relative position with reference to the information processing device or information of the position of the peripheral device 7 in the map information of the area around the information processing device 3.

Further, the map information related to the area around the information processing device 3 may be input to the information processing device 3 by the user or may be acquired by the information processing device 3 on the basis of information of the camera 14, the range sensor 15, or the like. Further, the information of the position of the peripheral device 7 may be input to the information processing device 3 by the user or may be acquired from the peripheral device 7.

### <3-2. Operation example of third embodiment>

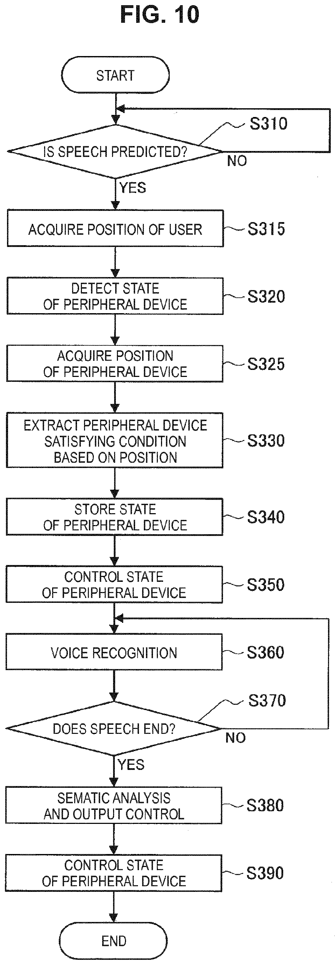

The configuration example of the information processing device 3 according to the third embodiment of the present disclosure has been described above. Next, an operation example of the information processing device 3 according to the present embodiment will be described with reference to FIG. 10.

FIG. 10 is a flowchart illustrating an operation example of the information processing device 3 according to the present embodiment. First, the control unit 30 repeats the speech prediction process until the speech of the user is predicted (S310), similarly to step S110 described with reference to FIG. 4.

In a case in which the speech of the user is predicted (YES in step S310), the user position acquiring unit 308 acquires the position of the user (S315). Then, the state detecting unit 204 transmits the transmission request for the capability information and the state information to the peripheral device 7, and receives the capability information and the state information from the peripheral device 7 (S320). Further, the state control unit 305 acquires the position of the peripheral device 7 from the storage unit 37 (S325).

Then, the state control unit 305 extracts the peripheral device 7 satisfying a condition based on the acquired position of the peripheral device 7 (S330). The state control unit 305 may extract the peripheral device 7 on the basis of the position of the peripheral device 7 or the position of the peripheral device 7 and the position of the user by any of the methods described above.

Then, the state control unit 305 causes the state information of the extracted peripheral device 7 to be stored in the storage unit 37 (S340). Further, the state control unit 305 controls the state of the extracted peripheral device 7 (S350). For example, the state control unit 305 generates a control signal for reducing the ambient sound (noise) for each of the extracted peripheral devices 7 on the basis of the capability information and the state information of the peripheral device 7 received in step S320 and causes the communication unit 11 to transmit the control signal.

Since a subsequent process of steps S360 to 390 illustrated in FIG. 10 is similar to the process of steps S160 to 190 described with reference to FIG. 4, description thereof is omitted.

### <3-3. Effects of third embodiment>

As described above, according to the third embodiment of the present disclosure, if the speech of the user is predicted, the state information with the position of the peripheral device 7 around the information processing device 3 is acquired, and the state control is performed such that the noise output from the peripheral device 7 extracted on the basis of the state information is reduced. With this configuration, even in a case in which there are other sound sources around the user, it is possible to improve the voice recognition accuracy when the user speaks. Further, according to the third embodiment of the present disclosure, the peripheral device 7 whose state is changed is extracted on the basis of the position of the peripheral device, and the state control is performed, and thus the state control of the peripheral device 7 can be performed more efficiently.

### <3-4. Supplement to third embodiment>

Further, in the above example, the example of extracting the control target on the basis of the position of the peripheral device 7 has been described, but the extraction of the control target may be performed in combination with the extraction of the control target based on the state of the peripheral device 7 described in the second embodiment.

Further, a control amount (for example, the size of causing the volume level to be decreased) may be dynamically set on the basis of the position of the peripheral device 7. For example, the control amount may be set such that the volume level of the peripheral device 7 closer to user is decreased. The setting of the control amount based on the position of the peripheral device 7 described above may be performed in combination with the extraction of the control target based on the position of the peripheral device 7.

Further, it is also possible to apply each of the modified examples described in the first embodiment to the third embodiment.

### <<4. Hardware configuration example>>

The embodiments of the present disclosure have been described above. The information processing such as the speech prediction process, the state detection process, the state control process, the voice recognition process, the semantic analysis process, and the like is implemented in cooperation with software and the information processing devices 1 to 3. A hardware configuration example of an information processing device 1000 will be described as an example of a hardware configuration of the information processing devices 1 to 3 which are information processing devices according to the present embodiment.

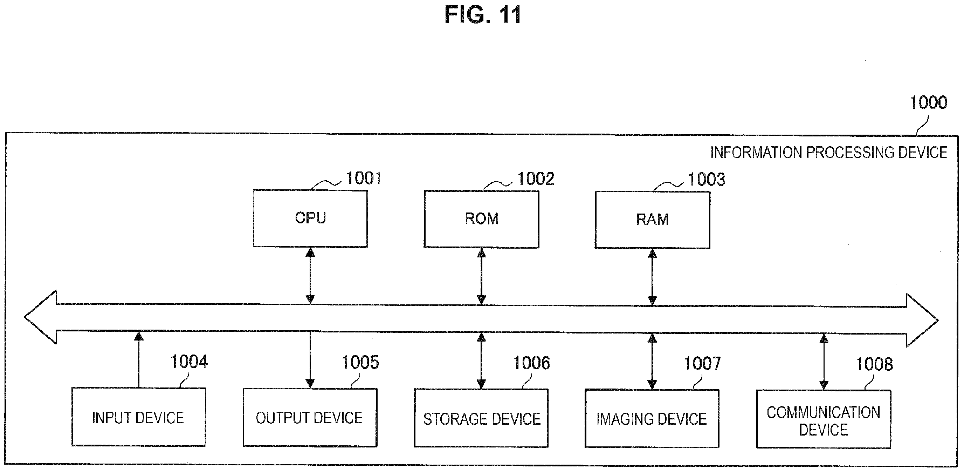

FIG. 11 is an explanatory diagram illustrating an example of a hardware configuration of the information processing device 1000. As illustrated in FIG. 11, the information processing device 1000 includes a central processing unit (CPU) 1001, a read only memory (ROM) 1002, a random access memory (RAM) 1003, an input device 1004, an output device 1005, a storage device 1006, an imaging device 1007, and a communication device 1008.

The CPU 1001 functions as an operation processing device and a control device and controls an overall operation of the information processing device 1000 in accordance with various kinds of programs. Further, the CPU 1001 may be a microprocessor. The ROM 1002 stores a program, an operation parameter, and the like which are used by the CPU 1001. The RAM 1003 temporarily stores a program to be used in the execution of the CPU 1001, a parameter that appropriately changes in the execution thereof, or the like. These components are connected to one another via a host bus including a CPU bus or the like. The functions of the control unit 10, the control unit 20, and the control unit 30 are mainly implemented by cooperation of the CPU 1001, the ROM 1002, and the RAM 1003 and software.

The input device 1004 includes an input device for inputting information such as a mouse, a keyboard, a touch panel, a button, a microphone, a switch, a lever, or the like, an input control circuit for generating an input signal on the basis of an input by the user and outputting the input signal to the CPU 1001. By operating the input device 1004, the user of the information processing device 1000 can input various kinds of data to the information processing device 1000 or give an instruction to perform a processing operation.

The output device 1005 includes a display device such as, for example, a liquid crystal display (LCD) device, an OLED device, a see-through display, or a lamp. Further, the output device 1005 includes an audio output device such as a speaker and a headphone. For example, the display device displays a captured image, a generated image, or the like. On the other hand, the audio output device converts voice data or the like into a voice and outputs the voice. For example, the output device 1005 corresponds to the speaker 13, projecting unit 16, and the light emitting unit 18 described above with reference to FIG. 3.

The storage device 1006 is a device for storing data. The storage device 1006 may include a storage medium, a recording device for recording data in a storage medium, a reading device for reading data from a storage medium, a deleting device for deleting data recorded in a storage medium, and the like. The storage device 1006 stores a program executed by the CPU 1001 and various kinds of data. The storage device 1006 corresponds to the storage unit 17 described above with reference to FIG. 3.

The imaging device 1007 includes an imaging optical system such as a photographing lens for collecting light and a zoom lens and a signal converting element such as a charge coupled device (CCD) or a complementary metal oxide semiconductor (CMOS). The imaging optical system collects light emitted from a subject and forms a subject image in a signal converting unit, and the signal converting element converts the formed subject image into an electric image signal. The imaging device 1007 corresponds to the camera 14 described above with reference to FIG. 3.

The communication device 1008 is, for example, a communication interface constituted by a communication device or the like for establishing a connecting with a communication network. Further, the communication device 1008 may include a communication device compatible with a wireless local area network (LAN), a communication device compatible with long term evolution (LTE), a wire communication device performing wired communication, or a Bluetooth (registered trademark) communication device. The communication device 1008 corresponds to the communication unit 11 described above with reference to FIG. 3, for example.

### <<5. Conclusion>>

As described above, according to the embodiment of the present disclosure, it is possible to improve the voice recognition accuracy even in a case in which there are other sound sources around the user.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, respective steps in the above embodiments need not be necessarily processed chronologically in accordance with the order described as the flowchart diagram. For example, respective steps in the processes of the above embodiments may be processed in an order different from the order described as the flowchart diagram or may be processed in parallel. For example, in the third embodiment, the example in which the peripheral devices satisfying a predetermined condition are extracted after detecting (acquiring) the state of the peripheral device, but the peripheral devices satisfying a predetermined condition may be extracted before detecting the state of the peripheral device.

Further, according to the above embodiments, it is also possible to provide a computer program causing hardware such as the CPU 1001, the ROM 1002, and the RAM 1003 to perform the functions similar to those of the information processing devices 1 to 3 described above. Further, a recording medium having the computer program recorded therein is also provided.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 1: information processing device
- 7: peripheral device
- 9: communication network
- 10: control unit
- 11: communication unit
- 12: sound collecting unit
- 13: speaker
- 14: camera
- 15: range sensor
- 16: projecting unit
- 17: storage unit
- 18: light emitting unit
- 101: speech predicting unit
- 102: voice recognizing unit
- 103: semantic analyzing unit
- 104: state detecting unit
- 105: state control unit
- 106: output control unit
- 307: acoustic field analyzing unit
- 308: user position acquiring unit
- 309: sound source separating unit

## Claims

1. An information processing device (1; 2; 3; 1000) for performing voice recognition or semantic analysis on speech (62) of a user (U1; U3), comprising:
a state detecting unit (104; 204) configured to detect a state of another device (7), which can be a source of noise, on a basis of sound collection; and
a state control unit (105; 205; 305) configured to control the state of the other device (7) on a basis of a detection result by the state detecting unit (204) for the state of the other device (7) and a notification indicating that the speech (62) of the user (U1; U3) is predicted,
wherein the state control unit (105; 205; 305) associates the information of a noise occurrence region, being specified on the basis of the sound collection, with the information of the position of the other device (7), and extract the other device (7) located within the noise occurrence region.

2. The information processing device (1; 2; 3; 1000) according to claim 1, wherein the state detecting unit (104; 204) detects the state of the other device (7) on a basis of communication.

3. The information processing device (1; 2; 3; 1000) according to claim 1 or 2, wherein the state control unit (105; 205; 305) causes a volume level of the other device (7) to be decreased.

4. The information processing device (1; 2; 3; 1000) according to anyone of claims 1 to 3, wherein the state control unit (105; 205; 305) causes an operation mode of the other device (7) to be changed.

5. The information processing device (1; 2; 3; 1000) according to anyone of claims 1 to 4, wherein the state control unit (105; 205; 305) controls the state of the other device (7) extracted from a plurality of the other devices on a basis of the state of the other device (7).

6. The information processing device(1; 2; 3; 1000) according to anyone of claims 1 to 5, wherein the state control unit (105; 205; 305) controls the state of the other device (7) further on a basis of a position of the other device (7).

7. The information processing device (1; 2; 3; 1000) according to claim 6, wherein the state control unit (105; 205; 305) controls a state of another device (7) located within a noise occurrence region specified on a basis of sound collection.

8. The information processing device (1; 2; 3; 1000) according to claim 6 or 7, wherein the state control unit (105; 205; 305) controls the state of the other device (7) further on a basis of a position of the user (U1; U3).

9. The information processing device (1; 2; 3; 1000) according to claim 8, wherein the state control unit (105; 205; 305) controls a state of another device (7) located in substantially a same direction as the position of the user (U1; U3) with reference to a position of the sound collecting unit (12).

10. The information processing device (1; 2; 3; 1000) according to claim 9, further comprising:
a sound source separating unit (309) configured to acquire a voice of the user (U1; U3) by separating the voice of the user (U1; U3) from the voice acquired by the sound collecting unit (12).

11. The information processing device (1; 2; 3; 1000) according to anyone of claims 8 to 10, wherein the state control unit (105; 205; 305) controls a state of another device (7) located near the position of the user (U1; U3).

12. The information processing device (1; 2; 3; 1000) according to claim 1, wherein the state control unit (105; 205; 305) controls the state of the other device (7) further on a basis of a voice recognition result based on speech (62) of the user (U1; U3), and/or wherein the state control unit (105; 205; 305) controls the state of the other device (7) further on a basis of a semantic analysis result based on speech (62) of the user (U1; U3).

13. An information processing method, performed by an information processing device, comprising:
performing voice recognition or semantic analysis on speech (62) of a user (U1; U3);
detecting (S120) a state of another device (7), which can be a source of noise, on a basis of sound collection; and
controlling (S150), by a state control unit, the state of the other device (7) on a basis of a detection result by the state detecting unit (204) for the state of the other device (7) and a notification indicating that the speech (62) of the user (U1; U3) is predicted,
wherein the state control unit (105; 205; 305) associates the information of a noise occurrence region, being specified on the basis of the sound collection, with the information of the position of the other device (7), and extract the other device (7) located within the noise occurrence region.

14. A computer program comprising instructions which, when the program is executed by a computer, cause the computer to carry out the method of claim 13.

## Patentansprüche

1. Informationsverarbeitungsvorrichtung (1; 2; 3; 1000) zum Durchführen von Stimmerkennung oder semantischer Analyse der Sprache (62) eines Benutzers (U1; U3), die Folgendes umfasst:
eine Zustandsdetektiereinheit (104; 204), ausgelegt zum Detektieren eines Zustands einer anderen Vorrichtung (7), die eine Quelle von Geräusch sein kann, auf Grundlage einer Klangsammlung; und
eine Zustandssteuereinheit (105; 205; 305), ausgelegt zum Steuern des Zustands der anderen Vorrichtung (7) auf Grundlage eines Detektionsergebnisses von der Zustandsdetektiereinheit (204) für den Zustand der anderen Vorrichtung (7) und einer Benachrichtigung, die anzeigt, dass die Sprache (62) des Benutzers (U1; U3) vorausgesagt wird,
wobei die Zustandssteuereinheit (105; 205; 305) die Informationen eines Geräuschvorkommensbereichs, der auf Grundlage der Klangsammlung angegeben wird, mit den Informationen der Position der anderen Vorrichtung (7) verknüpft und die innerhalb des Geräuschvorkommensbereichs befindliche andere Vorrichtung (7) extrahiert.

2. Informationsverarbeitungsvorrichtung (1; 2; 3; 1000) nach Anspruch 1, wobei die Zustandsdetektiereinheit (104; 204) den Zustand der anderen Vorrichtung (7) auf Grundlage einer Kommunikation detektiert.

3. Informationsverarbeitungsvorrichtung (1; 2; 3; 1000) nach Anspruch 1 oder 2, wobei die Zustandssteuereinheit (105; 205; 305) bewirkt, dass ein Lautstärkepegel der anderen Vorrichtung (7) verringert wird.

4. Informationsverarbeitungsvorrichtung (1; 2; 3; 1000) nach einem der Ansprüche 1 bis 3, wobei die Zustandssteuereinheit (105; 205; 305) bewirkt, dass ein Betriebsmodus der anderen Vorrichtung (7) geändert wird.

5. Informationsverarbeitungsvorrichtung (1; 2; 3; 1000) nach einem der Ansprüche 1 bis 4, wobei die Zustandssteuereinheit (105; 205; 305) den Zustand der anderen Vorrichtung (7), die aus mehreren der anderen Vorrichtungen extrahiert wird, auf Grundlage des Zustands der anderen Vorrichtung (7) steuert.

6. Informationsverarbeitungsvorrichtung (1; 2; 3; 1000) nach einem der Ansprüche 1 bis 5, wobei die Zustandssteuereinheit (105; 205; 305) den Zustand der anderen Vorrichtung (7) ferner auf Grundlage einer Position der anderen Vorrichtung (7) steuert.

7. Informationsverarbeitungsvorrichtung (1; 2; 3; 1000) nach Anspruch 6, wobei die Zustandssteuereinheit (105; 205; 305) einen Zustand einer anderen Vorrichtung (7), die sich innerhalb eines auf Grundlage einer Klangsammlung angegebenen Geräuschvorkommensbereichs befindet, steuert.

8. Informationsverarbeitungsvorrichtung (1; 2; 3; 1000) nach einem der Ansprüche 6 oder 7, wobei die Zustandssteuereinheit (105; 205; 305) den Zustand der anderen Vorrichtung (7) ferner auf Grundlage einer Position des Benutzers (U1; U3) steuert.

9. Informationsverarbeitungsvorrichtung (1; 2; 3; 1000) nach Anspruch 8, wobei die Zustandssteuereinheit (105; 205; 305) einen Zustand einer anderen Vorrichtung (7), die sich im Wesentlichen in einer gleichen Richtung wie die Position des Benutzers (U1; U3) befindet, bezüglich einer Position der Klangsammlungseinheit (12), steuert.

10. Informationsverarbeitungsvorrichtung (1; 2; 3; 1000) nach Anspruch 9, die ferner Folgendes umfasst:
eine Klangquellentrenneinheit (309), ausgelegt zum Erfassen einer Stimme des Benutzers (U1; U3) durch Trennen der Stimme des Benutzers (U1; U3) von der durch die Klangsammlungseinheit (12) erfassten Stimme.

11. Informationsverarbeitungsvorrichtung (1; 2; 3; 1000) nach einem der Ansprüche 8 bis 10, wobei die Zustandssteuereinheit (105; 205; 305) einen Zustand einer anderen Vorrichtung (7), die sich nahe der Position des Benutzers (U1; U3) befindet, steuert.

12. Informationsverarbeitungsvorrichtung (1; 2; 3; 1000) nach Anspruch 1, wobei die Zustandssteuereinheit (105; 205; 305) den Zustand der anderen Vorrichtung (7) ferner auf Grundlage eines Stimmerkennungsergebnisses basierend auf Sprache (62) des Benutzers (U1; U3) steuert, und/oder wobei die Zustandssteuereinheit (105; 205; 305) den Zustand der anderen Vorrichtung (7) ferner auf Grundlage eines semantischen Analyseergebnisses basierend auf Sprache (62) des Benutzers (U1; U3) steuert.

13. Informationsverarbeitungsverfahren, durchgeführt durch eine Informationsverarbeitungsvorrichtung, das Folgendes umfasst:
Durchführen von Stimmerkennung oder semantischer Analyse der Sprache (62) eines Benutzers (U1; U3);
Detektieren (S120) eines Zustands einer anderen Vorrichtung (7), die eine Quelle von Geräusch sein kann,
auf Grundlage einer Klangsammlung; und
Steuern (S150), durch eine Zustandssteuereinheit, des Zustands der anderen Vorrichtung (7) auf Grundlage eines Detektionsergebnisses von der Zustandsdetektiereinheit (204) für den Zustand der anderen Vorrichtung (7) und einer Benachrichtigung, die anzeigt, dass die Sprache (62) des Benutzers (U1; U3) vorausgesagt wird,
wobei die Zustandssteuereinheit (105; 205; 305) die Informationen eines Geräuschvorkommensbereichs, der auf Grundlage der Klangsammlung angegeben wird, mit den Informationen der Position der anderen Vorrichtung (7) verknüpft und die innerhalb des Geräuschvorkommensbereichs befindliche andere Vorrichtung (7) extrahiert.

14. Computerprogramm, umfassend Befehle, die, wenn das Programm durch einen Computer ausgeführt wird, den Computer veranlassen, das Verfahren nach Anspruch 13 durchzuführen.

## Revendications

1. Dispositif de traitement d'informations (1 ; 2 ; 3 ; 1000) permettant de réaliser une reconnaissance vocale ou une analyse sémantique sur la parole (62) d'un utilisateur (U1 ; U3), comprenant :
une unité de détection d'état (104 ; 204) configurée pour détecter un état d'un autre dispositif (7), pouvant constituer une source de bruit, sur la base d'un captage de son ; et
une unité de commande d'état (105 ; 205 ; 305) configurée pour commander l'état de l'autre dispositif (7) sur la base d'un résultat de détection par l'unité de détection d'état (204) pour l'état de l'autre dispositif (7) et d'une notification indiquant que la parole (62) de l'utilisateur (U1 ; U3) est prédite,
l'unité de commande d'état (105 ; 205 ; 305) associant les informations d'une région de présence de bruit, spécifiée sur la base du captage de son, aux informations sur la position de l'autre dispositif (7) et extrayant l'autre dispositif (7) situé dans la région de présence de bruit.

2. Dispositif de traitement d'informations (1 ; 2 ; 3 ; 1000) selon la revendication 1, dans lequel l'unité de détection d'état (104 ; 204) détecte l'état de l'autre dispositif (7) sur la base d'une communication.

3. Dispositif de traitement d'informations (1 ; 2 ; 3 ; 1000) selon la revendication 1 ou 2, dans lequel l'unité de commande d'état (105 ; 205 ; 305) déclenche une baisse d'un niveau de volume de l'autre dispositif (7).

4. Dispositif de traitement d'informations (1 ; 2 ; 3 ; 1000) selon l'une quelconque des revendications 1 à 3, dans lequel l'unité de commande d'état (105 ; 205 ; 305) déclenche un changement d'un mode de fonctionnement de l'autre dispositif (7).

5. Dispositif de traitement d'informations (1 ; 2 ; 3 ; 1000) selon l'une quelconque des revendications 1 à 4, dans lequel l'unité de commande d'état (105 ; 205 ; 305) commande l'état de l'autre dispositif (7) extrait d'une pluralité d'autres dispositifs sur la base de l'état de l'autre dispositif (7).

6. Dispositif de traitement d'informations (1 ; 2 ; 3 ; 1000) selon l'une quelconque des revendications 1 à 5, dans lequel l'unité de commande d'état (105 ; 205 ; 305) commande l'état de l'autre dispositif (7) sur la base en outre d'une position de l'autre dispositif (7).

7. Dispositif de traitement d'informations (1 ; 2 ; 3 ; 1000) selon la revendication 6, dans lequel l'unité de commande d'état (105 ; 205 ; 305) commande un état d'un autre dispositif (7) situé dans une zone de présence de bruit spécifiée sur la base d'un captage de son.

8. Dispositif de traitement d'informations (1 ; 2 ; 3 ; 1000) selon la revendication 6 ou 7, dans lequel l'unité de commande d'état (105 ; 205 ; 305) commande l'état de l'autre dispositif (7) sur la base en outre d'une position de l'utilisateur (U1 ; U3).

9. Dispositif de traitement d'informations (1 ; 2 ; 3 ; 1000) selon la revendication 8, dans lequel l'unité de commande d'état (105 ; 205 ; 305) commande un état d'un autre dispositif (7) situé sensiblement dans une même direction que la position de l'utilisateur (U1 ; U3) par rapport à une position de l'unité de captage de son (12).

10. Dispositif de traitement d'informations (1 ; 2 ; 3 ; 1000) selon la revendication 9, comprenant en outre :
une unité de dissociation de source sonore (309) configurée pour acquérir une voix de l'utilisateur (U1 ; U3) en dissociant la voix de l'utilisateur (U1 ; U3) de la voix acquise par l'unité de captage de son (12).

11. Dispositif de traitement d'informations (1 ; 2 ; 3 ; 1000) selon l'une quelconque des revendications 8 à 10, dans lequel l'unité de commande d'état (105 ; 205 ; 305) commande un état d'un autre dispositif (7) situé à proximité de la position de l'utilisateur (U1 ; U3).

12. Dispositif de traitement d'informations (1 ; 2 ; 3 ; 1000) selon la revendication 1, dans lequel l'unité de commande d'état (105 ; 205 ; 305) commande l'état de l'autre dispositif (7) sur la base en outre d'un résultat de reconnaissance vocale basé sur la parole (62) de l'utilisateur (U1 ; U3), et/ou dans lequel l'unité de commande d'état (105 ; 205 ; 305) commande l'état de l'autre dispositif (7) sur la base en outre d'un résultat d'analyse sémantique basé sur la parole (62) de l'utilisateur (U1 ; U3).

13. Procédé de traitement d'informations, réalisé par un dispositif de traitement d'informations, comprenant :
la réalisation d'une reconnaissance vocale ou d'une analyse sémantique sur la parole (62) d'un utilisateur (U1 ; U3) ;
la détection (S120) d'un état d'un autre dispositif (7), pouvant constituer une source de bruit, sur la base d'un captage de son ; et
la commande (S150), par une unité de commande d'état, de l'état de l'autre dispositif (7) sur la base d'un résultat de détection par l'unité de détection d'état (204) pour l'état de l'autre dispositif (7) et d'une notification indiquant que la parole (62) de l'utilisateur (U1 ; U3) est prédite,
l'unité de commande d'état (105 ; 205 ; 305) associant les informations d'une région de présence de bruit, spécifiée sur la base du captage de son, aux informations sur la position de l'autre dispositif (7) et extrayant l'autre dispositif (7) situé dans la région de présence de bruit.

14. Programme d'ordinateur comprenant des instructions qui, lorsque le programme est exécuté par un ordinateur, amènent l'ordinateur à mettre en œuvre le procédé selon la revendication 13.
